# EUROPEAN PATENT APPLICATION

(11) **EP 1 465 394 A2**
(43) Date of publication of application: **06.10.2004**
(21) Application number: 04008102.8
(22) Date of filing: 02.04.2004
(51) Int. Cl.: H04M 1/725, H04M 1/247

(54) **Display of HTML documents on a mobile communication terminal**

(30) Priority: 02.04.2003 KR 2003020819
(71) Applicant: Samsung Electronics Co., Ltd., Suwon-si, Gyeonggi-do 442-742 (KR)
(72) Inventor: Lee, Woo-Jin Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

A mobile communication terminal for selecting a hyperlinked phrase or image in an HTML document, and a method for displaying an HTML document on a mobile communication terminal. The method comprises: wirelessly accessing the Web to receive an HTML document; recognizing hyperlink tags included in the HTML document; assigning different identification numbers to respective website addresses of hyperlinked elements according to said hyperlink tags; displaying the HTML document with said identification numbers inserted into the positions at which corresponding hyperlinked elements are displayed; and accessing a hyperlinked address, which is assigned an identification number corresponding to a number key inputted by a user, among said addresses of hyperlinked elements. The user can access thewebsite address of a hyperlinked phrase or image in an HTML document by pressing a number key corresponding to the identification number assigned to the hyperlinked phrase or image.

## Description

The present invention relates to a mobile communication terminal, and more particularly to a method for handling and displaying an HTML (HyperText Markup Language) document on a mobile communication terminal.

Previously, WAP (Wireless Application Protocol) browsers have been used to wirelessly access the Web using mobile terminals. WAP browsers allow mobile users with wireless devices to view text versions of accessed internet sites. WAP browsers convert HTML data into WML (Wireless Markup Language) in text and display the text version. In order for the user of a mobile terminal to access another document on the Web from the currently displayed document, the linked documents are numbered and listed on the display of the mobile terminal. The user can access a linked document using the key input section of the mobile terminal.

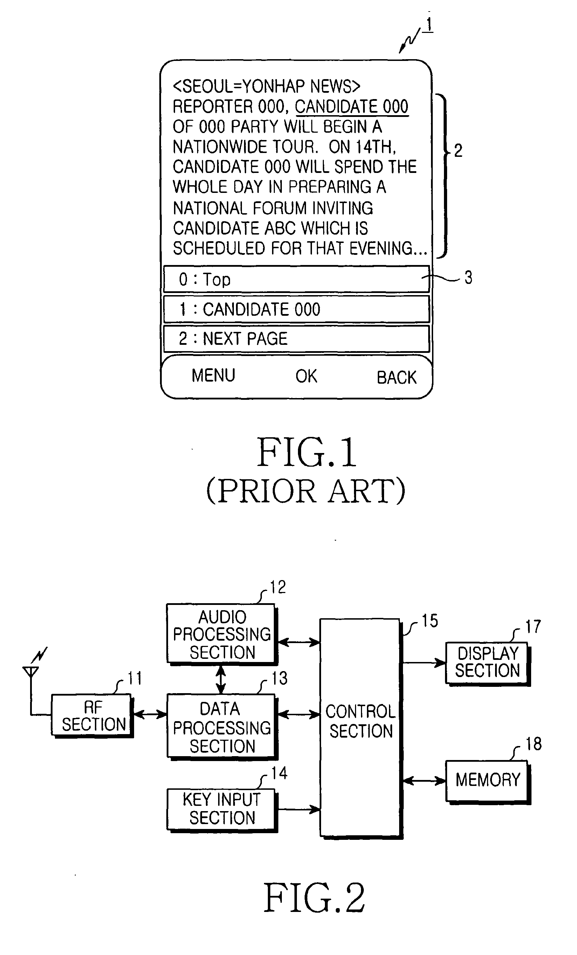

FIG. 1 shows a conventional mobile communication terminal 1 displaying an HTML document. As shown in FIG. 1, a conventional WAP browser, having no hyperlink function, separately displays a list 3 of the linked documents with respective numbers below the current HTML document 2.

Mobile terminals having built-in wireless browsers can now support HTML as well as WML due to the development of wireless Internet functions. In order to fully use hyperlinking, which is the basic linking function in HTML, it is necessary to provide a method for selecting hyperlinked elements on a mobile phone or an Internet TV by a keypad with number keys only, rather than by an input device such as a mouse provided for a computer.

Web browsers generally highlight the hyperlinked elements in an HTML document with color and/or underlines to enable users to easily select them using a mouse or touch pad. However, it is difficult to access hyperlinked elements on a mobile terminal or an Internet TV, which only the limited range of inputs of a keypad or remote controller. The HTML 4.0 specification offers a solution to this problem. According to the HTML 4.0 specification, an access key or a tab key is assigned to each hyperlinked element of a Web page in order to allow the user to place the focus on an element on a computer having no mouse or touch pad. Access keys can be assigned to the hyperlinked elements by authors of HTML documents. However, the tab key, rather than access keys, is generally used to move the focus between hyperlinked elements in an HTML document. Even if access keys are assigned to hyperlinked elements, they are available only on a computer keyboard. Mobile terminals having a key input device other than a computer keyboard cannot use the assigned access keys.

In addition, a conventional mobile terminal allots only a small space for displaying an HTML document, because it generates HTTP hyperlinks in a separate list and displays the list together with the HTML document, leaving little room for the HTML document.

Therefore, to facilitate use of HTML hyperlinks on mobile terminals, wireless service providers should readjust and reset the access keys assigned on a general computer keyboard.

It is the object of the present invention to provide a mobile communication terminal for selecting a hyperlinked phrase or image in an HTML document and a method for displaying an HTML document on a mobile communication terminal, each using a number key provided on a key input section to access the website address of the hyperlinked phrase or image.

This object is solved by the subject matters of the independent claims.

Preferred embodiments are defined in the dependent claims.

To accomplish this object, there is provided a method for displaying an HTML document on a mobile communication terminal which can wirelessly access the Web and display HTML documents, said method comprising: a first step of wirelessly accessing the Web to receive an HTML document; a second step of recognizing hyperlink tags included in the HTML document; a third step of assigning different identification numbers to respective website addresses of hyperlinked elements according to said hyperlink tags; a fourth step of displaying the HTML document with said identification numbers inserted into the positions at which corresponding hyperlinked elements are displayed; and a fifth step of accessing a hyperlinked address, which is assigned an identification number corresponding to a number key inputted by a user, among said addresses of hyperlinked elements.

In accordance with another aspect of the present invention, there is provided a mobile communication terminal which can wirelessly access the Web and display HTML documents, comprising: a HTML tag analyzing section for analyzing hyperlink tags in an HTML document received by accessing the wireless Web; a hyperlink selection number setting section for assigning different identification numbers to respective website addresses of hyperlinked elements according to the hyperlink tags analyzed by said HTML tag analyzing section; a hyperlink position recognizing section for recognizing the positions at which the hyperlinked elements are displayed; a display section for displaying the HTML document with said identification numbers inserted into the positions at which corresponding hyperlinked elements are displayed; and a control section for accessing a hyperlinked address, which is assigned an identification number corresponding to a number key inputted by a user, among said addresses of hyperlinked elements.

The above features and advantages of the present invention will be more apparent from the following detailed description taken in conjunction with the accompanying drawings, in which:
FIG. 1 shows a conventional mobile communication terminal displaying an HTML document;
FIG. 2 is a block diagram of a mobile communication terminal according to the present invention;
FIG. 3 shows the construction of a software for implementing a function of setting hyperlink selection numbers according to the present invention;
FIG. 4 shows the construction of a hyperlink selection number table of FIG. 1.
FIG. 5 is a control flow showing the process of setting hyperlink selection numbers on a mobile communication terminal according to the first embodiment of the present invention;
FIGs. 6a and 6b show a mobile communication terminal displaying a sample HTML document with hyperlink selection numbers inserted according to the process of setting hyperlink selection numbers as shown in FIG. 5;
FIG. 7 is a control flow showing the process of setting hyperlink selection numbers on a mobile communication terminal according to the second embodiment of the present invention;
FIGs. 8a and 8b show a mobile communication terminal displaying a sample HTML document with hyperlink selection numbers inserted according to the process of setting hyperlink selection numbers as shown in FIG. 7; and
FIGs. 9a and 9b show a mobile communication terminal displaying a sample HTML document with hyperlink selection numbers inserted according to the third embodiment of the present invention.

Preferred embodiments of the present invention will be described below with reference to the accompanying drawings. In the drawings, the same element, although depicted in different drawings, will be designated by the same reference numeral or character. Also, in the following description of the present invention, a detailed description of known functions and configurations incorporated herein will be omitted when it may make the subject matter of the present invention unclear.

FIG. 2 is a block diagram of a mobile communication terminal according to the present invention. As shown in FIG. 2, the mobile communication terminal comprises an RF section 11 for receiving and transmitting a radio signal through an antenna, a data processing section 13 connected to the RF section 11 to process an audio or data signal received from or transmitted to the RF section 11, an audio processing section 12 for processing an audio signal outputted from the data processing section 13, a display section 17, a key input section 14, a memory 18 and a control section 15 for controlling general operations of the terminal.

The RF section 11 performs the wireless communication function of the mobile communication terminal 1. The RF section 11 includes an RF transmitter for performing upward conversion and amplification of the frequency of a signal which is being transmitted and an RF receiver for amplifying, with low noise, a signal which is being received and performing downward conversion of the frequency of the received signal. The data processing section 13 may be composed of a modem and a CODEC. The CODEC comprises a data CODEC for processing packet data and an audio CODEC for processing an audio signal such as voice. The data processing section 13 demodulates an HTML document on a Web page, which has been received through the RF section 11, and provides the HTML document to the control section 15.

The display section 17 displays the user's data outputted from the control section 15. The display section 17 can be an LCD.

The key input section 14 comprises keys for inputting numbers or letters, a key for wirelessly accessing the Web, up and down keys for moving a picture of an HTML document displayed when wirelessly accessing the Web, and function keys for setting various functions.

The memory 18 stores a hyperlink selection number table 30, which maps the hyperlinked addresses included in an HTML document received through the RF section 11 with different identification numbers of the key input section 14, as well as SMS data and typical terminal data such as telephone numbers. In addition, the memory 18 stores identification number image data which will be displayed together with hyperlinked information. The hyperlinked information includes phrases and images.

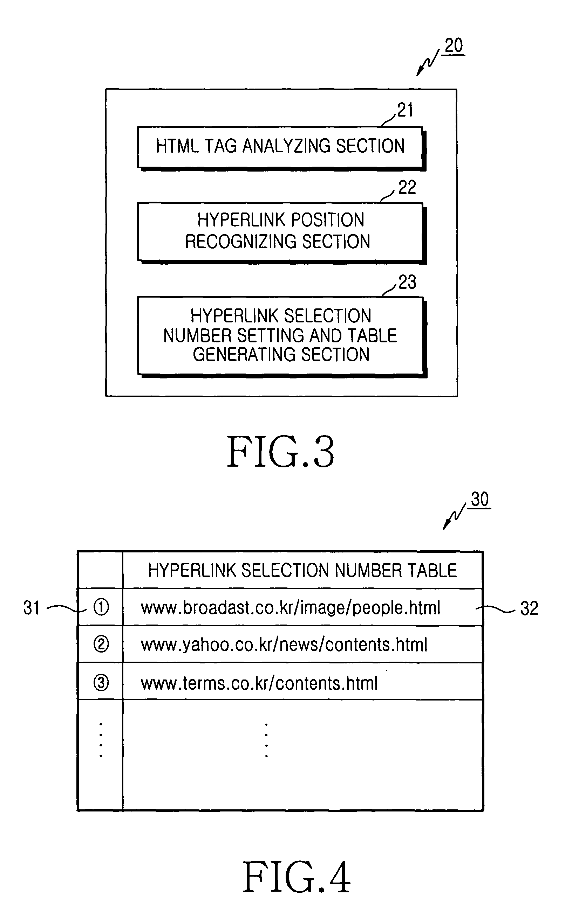

FIG. 3 show the construction of a software for implementing a function of setting hyperlink selection numbers according to the present invention. The software according to the present invention is a kind of control program operated by the control section 15. As shown in FIG. 3, the control section 15 comprises a hyperlink position recognizing section 22, an HTML tag analyzing section 21 for analyzing hyperlink tags included in an HTML document and a hyperlink selection number setting and table generating section 23. The control section 15 analyzes an HTML document by the HTML tag analyzing section 21, recognizes phrases or images hyperlinked using hyperlink tags and also recognizes website addresses to which the recognized phrases or images are hyperlinked.

The hyperlink selection number setting and table generating section 23 serially assigns numbers from the number keys of the key input section 14 to the hyperlinked phrases or images recognized by the HTML tag recognizing section 21, and generates the hyperlink selection number table 30 as shown in FIG. 4 based on the serially assigned numbers (identification numbers) and the corresponding website addresses of the hyperlinked phrases or images.

The control section 15 recognizes video signals relating to the hyperlinked phrases or images, among video signals of the HTML document outputted to the display section 17, through the hyperlink position recognizing section 22. The control section 15 reads video signals of the images corresponding to the identification numbers stored in the memory 18 based on the hyperlink selection number table 30, synthesizes the video signals of the images corresponding to the identification numbers with video signals relating to the corresponding hyperlinks, and outputs the synthesized signals to the display section 17. The control section 15 should preferably display identification numbers to overlap or be adjacent to the hyperlinked phrases or images.

Using the software as explained above, the control section 15 checks hyperlink tags in an HTML document provided from the data processing section 13 and confirms whether hyperlinked addresses are set for the hyperlinked phrases or images in the HTML document. Also, the control section 15 serially assigns identification numbers, corresponding to the numbers on the number keys, to the website addresses to which the hyperlinked phrases or images are linked, and displays number images together with the hyperlinked phrases or images on the display section 17. Further, the control section 15 updates the hyperlink selection number table (see FIG. 4) whenever receiving a new HTML document, and stores the updated table in the memory 18.

FIG. 4 shows an example format of a hyperlink selection number table 30. The hyperlink selection number table 30 stores identification numbers on the number keys of the key input section 14, together with corresponding hyperlinked addresses 32. For example, "1," "2", and "3" among numbers on the number keys of the key input section 14 are set as identification numbers for accessing a website address showing photographic data, a website address offering news data, and a website address offering definitions of terms, respectively. A two-digit number can also be assigned as an identification number to a hyperlinked address; in this case, the user may access the hyperlinked address by sequentially pressing the two pertinent numbers on the key input section.

A process of accessing a hyperlinked website address by pressing a number key on the key input section 14 of the mobile communication terminal according to the present invention will be described below in detail.

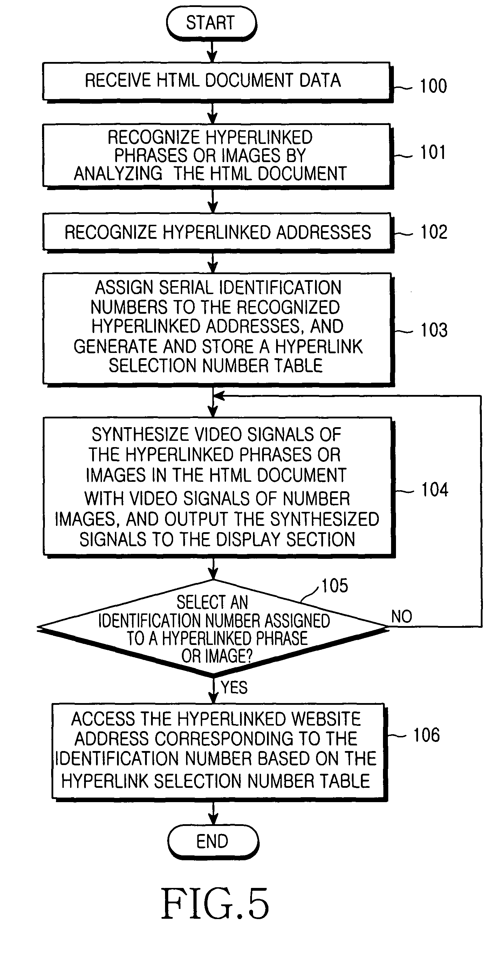

FIG. 5 is a control flow showing the process of setting hyperlink selection numbers on a mobile communication terminal according to the first embodiment of the present invention. At step 100, the mobile communication terminal receives HTML document data through the RF section 11. At step 101, the HTML tag analyzing section 21 of the control section 15 checks the HTML document and recognizes phrases or images identified by hyperlink tags. At step 102, the HTML tag analyzing section 21 recognizes website addresses to which the recognized phrases or images are linked. At step 103, the hyperlink selection number setting and table generating section 23 assigns serial identification numbers to the hyperlinked addresses recognized at the previous step, generates the hyperlink selection number table 30 and stores the table in the memory 18. At step 104, the control section 15 recognizes video signals representing the hyperlinked phrases or images, among video signals representing the HTML document, by the hyperlink position recognizing section 22, synthesizes the recognized video signals with those of number images, and outputs the synthesized signals to the display section 17. If the user selects an identification number by pressing the number key on the key input section 14 corresponding to the identification number at step 105, the control section 15 will access the website address corresponding to the selected identification number based on the hyperlink selection number table 30 at step 106.

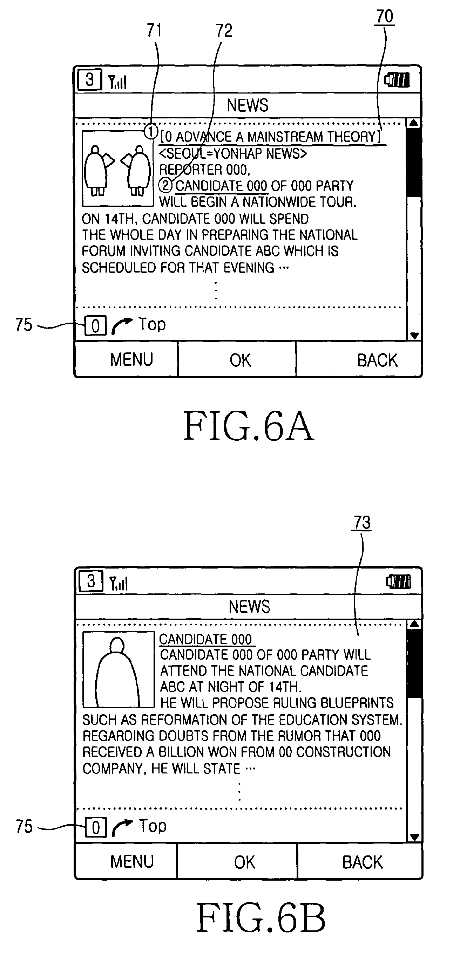

FIGs. 6a and 6b show a mobile communication terminal displaying a sample HTML document with hyperlink selection numbers inserted according to the process of setting hyperlink selection numbers as shown in FIG. 5. If the user accesses a news site by pressing an internet access key (not shown) of the mobile terminal, an HTML document containing news data, received from the accessed news site, will be displayed on the display section 17 as shown in FIG. 6A. According to the present invention, hyperlinked phrases or images in the HTML document displayed on the display section 17 are identified by serial identification numbers. When identification number "1" is selected on the key input section 14, the user can access the website address to which the picture displayed on the left top of the display section 17 is hyperlinked. When number "2" is selected, the user can access the website address to which the phrase "Candidate 000" is hyperlinked. An icon 75 of identification number "0" displayed at the left bottom of the display section 17 is selected to return to the startup homepage of the HTML document. FIG. 6b shows a sub-page displayed on the display section 17 when identification number "1" is selected on the key input section 14. In other words, the sub-page shown in FIG. 6b is an HTML document received by accessing the website address to which the image with identification number "1" in FIG. 6a is hyperlinked.

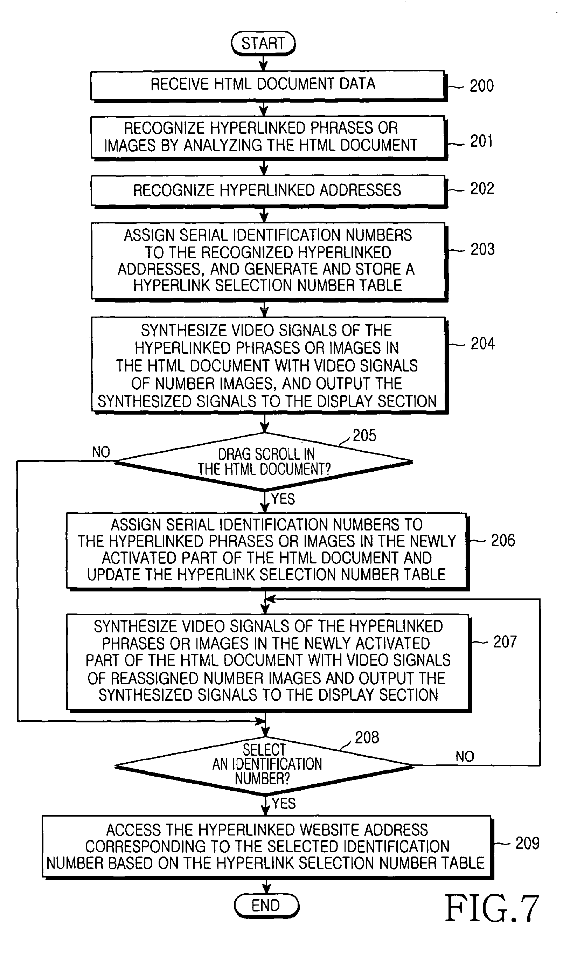

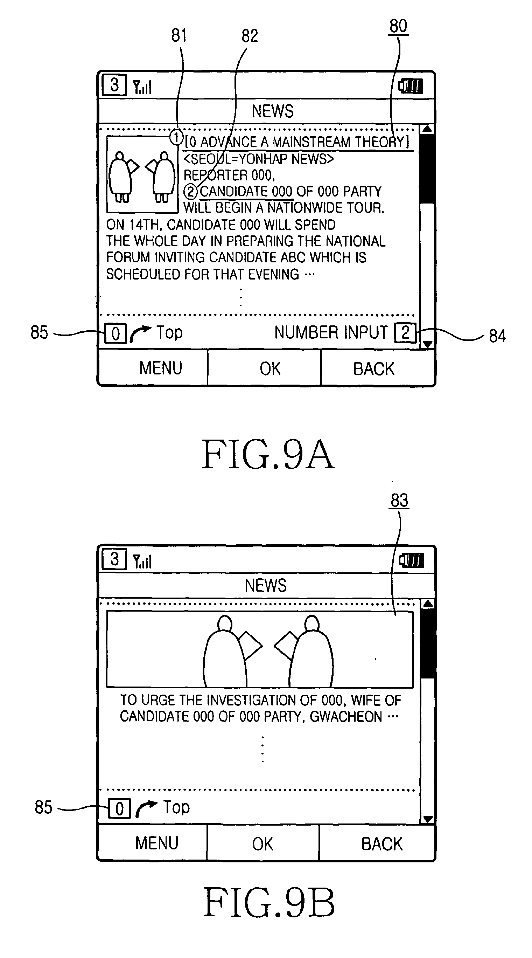

FIG. 7 is a control flow showing the process of setting hyperlink selection numbers on a mobile communication terminal according to the second embodiment of the present invention. At step 200, the mobile communication terminal receives HTML document data through the RF section 10. At step 201, the HTML tag analyzing section 21 analyzes hyperlink tags included in the HTML document and recognizes phrases or images identified by hyperlink tags. At step 202, the HTML tag analyzing section 21 recognizes website addresses to which the recognized phrases or images are hyperlinked. At step 203, the hyperlink selection number setting and table generating section 23 assigns serial identification numbers to the hyperlinked addresses recognized at the previous step, generates the hyperlink selection number table 30 and stores the table in the memory 18. At step 204, the control section 15 analyzes video signals of the HTML document outputted to the display section 17 by the hyperlink position recognizing section 22, synthesizes video signals representing the hyperlinked phrases or images in the HTML document with video signals of number images, and outputs the synthesized signals to the display section 17. When part of the HTML document is displayed on the display section 17, the user can drag the square scroll in the scroll bar as shown in FIG. 9 using the up and down keys on the key input section 14 in order to display the inactivated part of the HTML document. If the user drags the scroll to display the inactivated part of the HTML document at step 205, the HTML tag analyzing section 21 analyzes and recognizes hyperlink tags included in the newly displayed (activated) part of the HTML document. Also, the hyperlink selection number setting and table generating section 23 serially assigns identification numbers within a predetermined range (for example, "0" to "9") to the hyperlinked phrases or images included in the newly activated part of the HTML document, and updates the hyperlink selection number table 30 accordingly. At step 207, the control section 15 synthesizes video signals of the hyperlinked phrases or images in the newly activated part of the HTML document with video signals of reassigned number images, and outputs the synthesized signals to the display section 17. At step 208, if the user selects an identification number by pressing the number key on the key input section 14 corresponding to the identification number, the control section 15 will access the website address corresponding to the selected identification number based on the hyperlink selection number table 30.

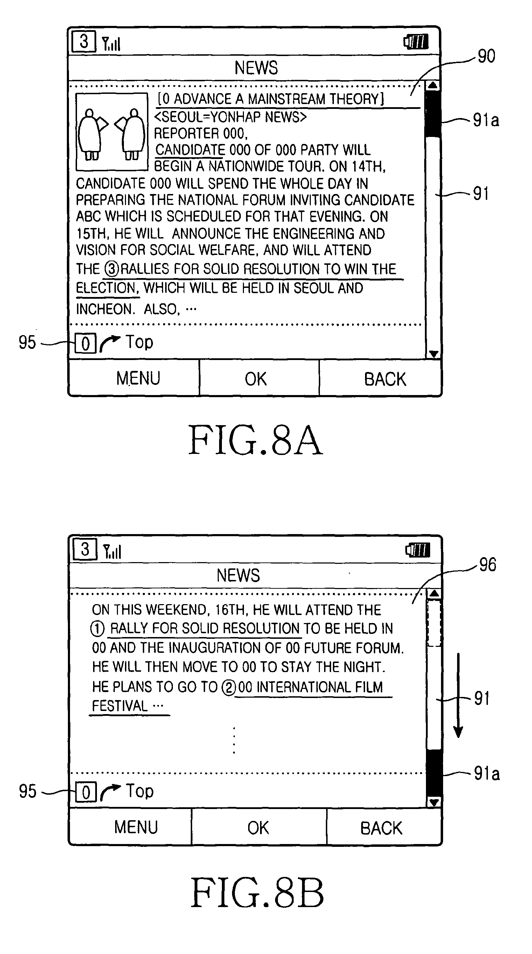

FIGs. 8a and 8b show a mobile communication terminal displaying a sample HTML document with hyperlink selection numbers inserted according to the process of setting hyperlink selection numbers as shown in FIG. 7. FIG. 8a shows a newly activated part of the HTML document, which is displayed by dragging down the scroll 91 a in the scroll bar 91. When part of the HTML document is displayed on the display section 17, the user can drag the scroll 91 a in the scroll bar 91 using the up and down keys on the key input section 14 in order to display the inactivated part of the HTML document. The hyperlinked phrases or images included in the newly activated part of the HTML document are serially assigned identification numbers within a predetermined range (for example, "0" to "5") and displayed together with the identification numbers in the display section 17. The control section 15 checks the hyperlinked phrases or images in the newly activated part of the HTML document, updates the hyperlink selection number table 30, and stores the updated table in the memory 18.

FIGs. 9a and 9b show a mobile communication terminal displaying a sample HTML document with hyperlink selection numbers inserted according to the third embodiment of the present invention. FIG. 9a shows a different method for inputting a number key on the key input section 14 to select a hyperlinked phrase or image. Unlike the display of an HTML document in FIG. 6a, the display of an HTML document 80 in FIG. 9 includes an input window 84 for showing an inputted identification number at the lower part thereof. When inputting an identification number by pressing a number key on the key input section 14, the user can confirm the inputted identification number through the input window 84. An icon 85 of identification number "0" displayed at the left bottom of the display section 17 is used to return to the startup homepage of the HTML document in the same manner as the icon illustrated in FIGs. 6a and 6b. If the user inputs number key "2" of the key input section 14 while the HTML document of FIG. 6a is displayed, the input number will be displayed in the input window 84 of FIG. 9a, and subsequently a hyperlinked sub-page 83 as shown in FIG. 9b will be displayed in the display section 17.

In consideration of the limited size of an LCD of a mobile communication terminal, the present invention creates a hyperlink selection number table listing the hyperlinked website addresses and corresponding identification numbers, and displays an HTML document with hyperlink selection numbers added to the hyperlinked phrases or images. When the user inputs a selection number using the key input section, the current HTML document is linked to the website address which is assigned the same selection number in the hyperlink selection number table. According to the present invention, it is possible to easily implement a hyperlink function on a mobile communication terminal.

In other words, the user can easily access the website address of a hyperlinked phrase or image in an HTML document displayed on the mobile communication terminal by pressing a number key corresponding to the identification (selection) number assigned to the hyperlinked phrase or image.

While the invention has been shown and described with reference to certain preferred embodiments thereof, it will be understood by those skilled in the art that various changes in form and details may be made therein without departing from the scope of the invention as defined by the appended claims.

## Claims

1. A method for displaying an HTML document on a mobile communication terminal which can wirelessly access the Web and display HTML documents, said method comprising:
wirelessly accessing the Web to receive an HTML document;
recognizing hyperlink tags included in the HTML document;
assigning different identification numbers to respective website addresses of hyperlinked elements according to said hyperlink tags;
displaying the HTML document with said identification numbers inserted into the positions at which corresponding hyperlinked elements are displayed; and
accessing a hyperlinked address, with the assigned identification number corresponding to a number key inputted by a user, among said addresses of hyperlinked elements.

2. The method according to claim 1, wherein said third step includes a step of storing in a memory a table which maps said addresses of hyperlinked elements to corresponding identification numbers.

3. The method according to claim 1 or 2, further comprising a step of storing image data of said identification numbers in a memory.

4. The method according to claim 3, wherein said displaying step comprises:
recognizing the positions at which said hyperlinked elements in the HTML document are indicated;
reading image data of the identification number corresponding to said inputted number key from said memory; and
synthesizing a video signal of the image data of said identification number read from the memory with a video signal of the corresponding hyperlinked element, and outputting the synthesized signal to a display section.

5. The method according to claim 4, wherein said hyperlinked elements include phrases and images.

6. The method according to one of claims 1 to 5, wherein the display of said HTML document includes an input window for showing the assigned identification number.

7. The method according to one of claims 1 to 6, wherein said HTML document has an activated part and an inactivated part, and said displaying step includes:
serially assigning identification numbers to hyperlinked addresses of hyperlink tags included in a newly activated part of said HTML document; and
displaying said newly activated part with the identification numbers inserted into the positions at which corresponding hyperlinked elements are displayed.

8. A mobile communication terminal which can wirelessly access the Web and display HTML documents, comprising:
a HTML tag analyzing section for analyzing hyperlink tags in an HTML document received by wirelessly accessing the Web;
a hyperlink selection number setting section for assigning different identification numbers to respective website addresses of hyperlinked elements according to the hyperlink tags analyzed by said HTML tag analyzing section;
a hyperlink position recognizing section for recognizing the positions at which the hyperlinked elements are displayed;
a display section for displaying the HTML document with said identification numbers inserted into the positions at which corresponding hyperlinked elements are displayed; and
a control section for accessing a hyperlinked address, which is assigned an identification number corresponding to a number key inputted by a user, among said addresses of hyperlinked elements.

9. The mobile communication terminal according to claim 8, wherein said control section further comprises a hyperlink selection number table generating section for mapping the recognized hyperlinked addresses to corresponding identification numbers and storing them as a table in a memory.

10. The mobile communication terminal according to claim 8 or 9, further comprising a memory for storing image data of said identification numbers.

11. The mobile communication terminal according to claim 10, wherein said control section reads image data of the identification number corresponding to said inputted number key from said memory, synthesizes a video signal of said image data read from the memory with a video signal of the hyperlinked element corresponding to the assigned identification number, and outputs the synthesized signal to the display section.

12. The mobile communication terminal according to claim 11, wherein said hyperlinked elements include phrases and images.

13. The mobile communication terminal according to one of claims 8 to 12, wherein said HTML document includes an input window for showing the assigned identification number.

14. The mobile communication terminal according to one of claims 8 to 13, wherein said HTML document has an activated part and an inactivated part, and said control section activates the inactivated part of said HTML document by the selection of keys on a key input section, newly assigns identification numbers to hyperlinked addresses of hyperlink tags included in the newly activated part, and displays the newly activated part with the identification numbers inserted into the positions at which corresponding hyperlinked elements are displayed.
